# EUROPÄISCHE PATENTSCHRIFT

(11) **EP 2 450 285 B1**
(45) Veröffentlichungstag und Bekanntmachung des Hinweises auf die Patenterteilung: **28.10.2015**
(21) Anmeldenummer: 10014290.0
(22) Anmeldetag: 04.11.2010
(51) Int. Cl.: B65D 1/24

(54) **Getränkekasten**
Bottle crate
Casier à bouteilles

(30) Priorität: 03.11.2010 DE 202010001491 U
(43) Veröffentlichungstag der Anmeldung: 09.05.2012
(73) Patentinhaber: Logipack Partner GmbH, 18439 Stalsund (DE)
(72) Erfinder: Nordmann, Jürgen, DE-18573 Rambin (DE)
(74) Vertreter: Hauck Patentanwaltspartnerschaft mbB

(56) Entgegenhaltungen:
- EP-A2- 1 882 636
- WO-A1-2010/055204
- CH-A- 477 329
- DE-A1- 10 352 600
- DE-A1-102004 038 615

## Beschreibung

Die Erfindung bezieht sich auf einen Getränkekasten zum Transportieren von einzelnen Flaschen und von Flaschenträgern mit darin enthaltenen Flaschen.

Getränkekästen werden zum Transportieren befüllter Flaschen vom Getränkehersteller zum Verbraucher und zum Rücktransport des Leerguts genutzt. Die befüllten Flaschen können einzeln oder in Flaschenträgern aus Karton in Getränkekästen eingesetzt sein. Die Flaschenträger können als Körbchen ("Basket") ausgeführt sein, die Gefache aufweisen, aus denen die Flaschenhälse der eingesetzten Flaschen oben herausragen. Gegebenenfalls weist das Körbchen eine Entnahmesicherung in Form eines von den Flaschenhälsen durchgriffenen Deckels auf, der die Flaschen im Träger sichert. Ferner sind Flaschenträger in Form von Manschetten ("Sleeve") bekannt, die um eine Flaschengruppe gehüllt sind, um diese zusammenzufassen. Die entleerten Flaschen werden in der Regel für den Rücktransport ohne Flaschenträger einzeln in die Getränkekästen eingesetzt. Es ist aber auch möglich, dass Leergut in Flaschenträger vom Körbchentyp eingesetzt für den Rücktransport in Getränkekästen zu platzieren.

Getränkekästen, die ausschließlich für den Transport einzelner Flaschen als Vollgut und Leergut bestimmt sind, weisen eine Vielzahl Gefache auf, in die die Flaschen eingesetzt sind. Die Gefache sind durch eine Vielzahl in Längs- und Querrichtung verlaufende, einander kreuzende Gefachwände abgegrenzt. Derartige Getränkekästen sind zum Einsetzen von Flaschen in Flaschenträgern nicht geeignet.

Für Flaschen in Flaschenträgern gibt es sogenannte "Pinolenkästen". Pinolenkästen haben vom Boden vorstehende, als "Pinolen" bezeichnete Zapfen. Zwischen jeweils vier Stellplätzen für Flaschen ist eine Pinole angeordnet. Jede Pinole hat einen etwa rautenförmigen Querschnitt, wobei die Seitenflächen in Anpassung an den Umfang einer Flasche leicht konkav gewölbt ist. Die Flaschenträger haben einen Boden, der zwischen jeweils vier Flaschen im Flaschenträger eine Ausstanzung zur Aufnahme einer Pinole aufweist. Bekannt sind Pinolenkästen für körbchenförmige Flaschenträger, bei denen um eine Pinole oder eine Reihe Pinolen angeordnete Stellplätze für Flaschen durch Stützwände eingefasst sind, die vom Boden des Getränkekastens hochstehen bzw. Seitenwände des Pinolenkastens sind. Die Pinolen gemeinsam mit den Stützwänden stützen die Flaschen seitlich ab. Einzeln eingesetzte Flaschen werden von den Stützwänden unmittelbar abgestützt. Wenn die Flaschen in Flaschenträger eingesetzt sind, werden sie von den Stützwänden unmittelbar über den Flaschenträger abgestützt, der unten von den Stützwänden eingefasst ist. Getränkekästen für Flaschenträger vom Manschettentyp haben in Reihen in gleichmäßigen Abständen voneinander angeordnete Pinolen. Diese greifen an den Stirnseiten zweier nebeneinander angeordneter Flaschenträger vom Manschettentyp in die Randabschnitte der beiden benachbarten Böden beider Flaschenträger ein. Hierfür sind die Böden der Flaschenträger an den Rändern mit Ausstanzungen zur Aufnahme einer halben Pinole ausgebildet. Ferner steht von der Bodenwand des Getränkekastens in der Mitte zwischen benachbarten Reihen aus Pinolen eine Einfassungswand vor, die an den Seiten der manschettenartigen Flaschenträger bzw. einzeln eingesetzter Flaschen anliegt.

Die bekannten Pinolenkästen sind jeweils nur für die Aufnahme eines bestimmten Flaschenträgertyps mit einem bestimmten Format geeignet. Es ist nicht möglich, in einen Pinolenkasten, der für die Aufnahme von Flaschenträgern für sechs Flaschen ("Sixpacks") bestimmt ist, einen Flaschenträger mit acht, zehn oder zwölf Flaschen einzusetzen. Das Einsetzen von kleineren Einheiten, als für die der Pinolenkasten ausgeführt ist, ist zwar möglich, ist jedoch nicht effizient.

Die WO 2010/055 204 A1 beschreibt einen plattenförmigen Ladungsträger für Flaschen, auf den zumindest Flaschenträger mit zwei, vier, sechs, acht und zehn Flaschen gesetzt werden können. Der Ladungsträger weist eine Unterseite mit Elementen zum Abstützen des Halses oder Kronkorkens von Flaschen und eine Oberseite zum Tragen der Böden von Flaschen auf. Um die Oberseite läuft ein Rand um, der Flaschen und Flaschenträger abstützt, die innerhalb des Randes angeordnet sind. Auf dem Ladungsträger gibt es zumindest vier Reihen mit Flaschenstellplätzen, in denen zumindest fünf Flaschenstellplätze angeordnet sind. Zwischen den Stellplätzen für Flaschen befinden sich Stützelemente, die von der Oberseite hochstehen, um einzelne Flaschen und Flaschenträger abzustützen. Zumindest in der Mitte von vier Stellplätzen für Flaschen an jeder Ecke des Ladungsträgers ist zumindest eine Halbpinole angeordnet, die zumindest eine gekrümmte Stützfläche aufweisen, die dem Stellplatz für Flaschen in der Ecke des Ladungsträgers zugeordnet ist. In der Mitte der beiden zentralen Reihen von Flaschenstellplätzen erstrecken sich Vorsprünge höchstens bis zur Höhe von Stützschwellen vom Boden hoch. Für den Transport werden Flaschen in Flaschenträgern oder einzelne Flaschen auf einen derartigen Ladungsträger aufgesetzt und ein weiterer Ladungsträger derselben Art oben auf die Hälse bzw. Kronkorken aufgesetzt, um die Anordnung zu stabilisieren. Der Verbraucher erwirbt einzelne Flaschenträger mit dem darin angeordneten Vollgut. Der Ladungsträger ist nicht zum Transport mehrerer Flaschenträger durch den Verbraucher geeignet. Falls der Verbraucher einen größeren Getränkekauf tätigen möchte, ist dies unpraktisch.

DE 10 2004 038 615 A1 offenbart einen Getränkekasten gemäß dem Oberbegriff des Anspruchs 1.

Davon ausgehend liegt der Erfindung die Aufgabe zugrunde, einen Ladungsträger für den Transport einer größeren Anzahl Flaschen zur Verfügung zu stellen, der sowohl mit einzelnen Flaschen als mit verschieden großen Flaschenträgern mit darin enthaltenen Flaschen bestückbar ist, wobei die Flaschen jeweils gefüllt oder ungefüllt sein können.

Die Aufgabe wird durch einen Getränkekasten mit den Merkmalen von Anspruch 1 gelöst. Vorteilhafte Ausgestaltungen des Getränkekastens sind in Unteransprüchen angegeben.

Der erfindungsgemäße Getränkekasten eignet sich sowohl für den Transport einzelner Flaschen und von Flaschenträgern mit verschiedenen Formaten mit oder ohne darin enthaltene Flaschen jeweils im gefüllten oder ungefüllten Zustand. Dabei kann der Getränkekasten Flaschenträger mit verschiedenen Formaten aufnehmen. Dieses sind beispielsweise Flaschenträger für vier, sechs, acht, zehn oder zwölf Flaschen oder eine Auswahl der genannten Formate. Die verschiedenen Flaschenträger sind bevorzugt nur mit einem bestimmten Typ Flaschen befüllt, die dieselben Abmessungen bzw. Füllmengen aufweisen, z.B. mit 1/2 - oder 1/3-Liter-Flaschen. Bevorzugt ist auch nur dieser Typ Flaschen einzeln in den Getränkekasten eingesetzt. Soweit Flaschen in Flaschenträgern in den Getränkekasten eingesetzt werden, ist eine hohe Stabilität der Anordnung bereits dadurch gegeben, dass die Flaschenträger an den Pinolen gehalten sind und die Flaschen in den Flaschenträgern gehalten sind. Einzelne Flaschen stützen sich hinreichend an den Seitenwänden des Getränkekastens, den Pinolen und weiteren Vorsprüngen auf dem Boden ab. Infolgedessen ist es nicht erforderlich, die Flaschen zusätzlich an den Flaschenhälsen bzw. Kronkorken zu halten. Somit kann auf eine Gestaltung der Unterseite des Bodens verzichtet werden, mit denen dieser oben auf die Flaschenhälse bzw. der Kronkorken aufsetzbar ist. In Stapeln aus erfindungsgemäßen Getränkekästen wird die Gewichtskraft über die Seitenwände übertragen. Glasbruch kann hierdurch vermieden werden. Dennoch können die eingesetzten Flaschen oder Flaschenträger durch die Öffnungen in den Seitenwänden von außen betrachtet werden. Ferner sind Öffnungen in den Seitenwänden zum bequemen Tragen des Getränkekastens nutzbar.

Die Stützelemente in der Mitte der vier Stellplätze an jeder Ecke sind zumindest als Halbpinole ausgebildet. Das bedeutet, dass sie als Halbpinole oder als Vollpinole ausgebildet sind. Die Vollpinole wird nachfolgend auch als "Pinole" bezeichnet. Die Ausbildung dieser Stützelemente hängt davon ab, welches Flaschenformat eingesetzt werden soll.

Bei einem Getränkekasten für 1/2-Liter-Flaschen ist in der Mitte von vier Stellplätzen für Flaschen an drei Ecken eine Pinole angeordnet und in der Mitte von vier Stellplätzen für Flaschen an einer weiteren Ecke eine Halbpinole angeordnet, die eine flache Seite hat, die der Pinole an derselben Schmalseite zugewandt ist. Gemäß einer weiteren Ausgestaltung hat dieser Getränkekasten an der Schmalseite in der Mitte von vier Stellplätzen für Flaschen an beiden Ecken Pinolen und in der Richtung derselben Reihe von Stellplätzen in der Mitte zwischen den nächsten vier Stellplätzen Halbpinolen, die mit einer flachen Seite den Pinolen an den Ecken der Schmalseite zugewandt sind. Gemäß einer weiteren Ausgestaltung dieses Getränkekastens ist in Querrichtung bezüglich der Reihen mit Stellplätzen für Flaschen zumindest eine Reihe mit Zentren zwischen einer Reihe von vier Flaschenstellplätzen vorhanden, in der höchstens Vorsprünge angeordnet sind, die sich bis zur Höhe von Stützschwellen erstrecken. Gemäß einer weiteren Ausgestaltung sind in den Getränkekasten zumindest wahlweise Flaschenträger für zwei, vier, sechs, acht und zehn Flaschen einsetzbar oder eingesetzt.

Die vorbeschriebenen Ausgestaltungen der Stützelemente entsprechen den Ausgestaltungen der Stützelemente und der Oberseite des plattenförmigen Ladungsträgers für Flaschen, der in der WO 2010/055 204 A1 beschrieben ist. Die diesbezüglichen Angaben in dem vorerwähnten Dokument werden durch Bezugnahme in die vorliegende Anmeldung einbezogen.

Bei einem Getränkekasten für 1/3-Liter-Flaschen ist in der Mitte von vier Stellplätzen für Flaschen an vier Ecken jeweils eine Pinole angeordnet.

Gemäß einer Ausgestaltung hat der Getränkekasten in Längsrichtung bezüglich der Reihen mit Stellplätzen für Flaschen im Bereich zwischen den in Längsrichtung voneinander beabstandeten Pinolen eine Reihe mit Zentren zwischen jeweils vier benachbarten Stellplätzen für Flaschen, in denen Vorsprünge angeordnet sind, die sich höchstens bis zur Höhe von Stützschwellen erstrecken.

Gemäß weiteren Ausgestaltungen sind in diesen Getränkekasten zumindest wahlweise Flaschenträger für zwei, vier, sechs, acht, zwölf (und gegebenenfalls zehn) Flaschen einsetzbar oder eingesetzt.

Der erfindungsgemäße Kasten kommt an der Unterseite des Bodens ohne Strukturen zum Halten der Flaschenhälse bzw. Kronkorken aus. Zur Stabilisierung des Kastens sind gemäß einer Ausgestaltung an der Unterseite des Bodens Versteifungselemente angeordnet. Gemäß einer weiteren Ausgestaltung sind die Versteifungselemente über die Unterseite des Bodens erstreckte Rippen. Dies ermöglicht eine materialsparende Aussteifung des Bodens. Gemäß einer weiteren Ausgestaltung sind mehrere parallele Rippen an der Unterseite des Bodens angeordnet. Gemäß einer weiteren Ausgestaltung sind die Rippen gitterartig angeordnet.

Der Kasten ist bevorzugt an der Unterseite mit Mitteln zum Führen versehen, die in eine Öffnung an der Oberseite eines gleichartigen Kastens einsetzbar sind, um die Kästen übereinander zu stapeln und zu sichern. Gemäß einer bevorzugten Ausgestaltung weist der Kasten an der Unterseite bezüglich der Seitenwände nach innen versetzte Sockelleisten auf, mit denen der Kasten in die obere Öffnung eines gleichartigen Kastens einsetzbar ist, wenn der Kasten mit seitlich über die Sockelleisten überstehenden Bereichen der auf den oberen Rand der Seitenwände des gleichartigen Kastens aufgesetzt. Gemäß einer weiteren Ausgestaltung erstrecken sich die Versteifungselemente an der Unterseite des Kastens von der Innenseite einer Sockelleiste bis zur Innenseite einer anderen Sockelleiste. Gemäß einer bevorzugten Ausgestaltung erstrecken sich die Rippen als Versteifungselemente von Sockelleiste zu Sockelleiste.

Gemäß einer bevorzugten Ausgestaltung ist der Flaschenkasten einteilig ausgeführt. Gemäß einer anderen Ausgestaltung sind die Seitenwände an einem Kastenrahmen ausgebildet, ist der Boden in den Kastenrahmen eingesetzt und sind Mittel zum lösbaren Halten des Bodens im Kastenrahmen vorhanden. Dies ermöglicht es, dieselbe Art von Kastenrahmen mit unterschiedlichen Böden zu bestücken. So kann beispielsweise mit verschiedenen Böden und demselben Kastenrahmen ein Träger für 1/2-Liter-Flaschen und für 1/3-Liter-Flaschen verwirklicht werden. Gemäß einer bevorzugten Ausgestaltung sind die Mittel zum lösbaren Halten Schnapp- bzw. Rastverbindungsmittel von Kastenrahmen und Boden.

Gemäß einer bevorzugten Ausgestaltung ist der Kasten aus mindestens einem Kunststoff hergestellt. Der Kasten wird bevorzugt im Spritzgießverfahren hergestellt. Bei Herstellung aus mehreren verschiedenen Kunststoffen kann er einteilig oder in Teilen im Mehrkomponentenspritzgießverfahren hergestellt sein.

In den erfindungsgemäßen Getränkekasten sind Flaschen in Flaschenträgern vom Manschettentyp und/oder Körbchentyp einsetzbar. Flaschenträger vom Manschettentyp sind beispielsweise in der EP 2 149 506 A1 beschrieben. Flaschenträger vom Körbchentyp sind beispielsweise in der EP1 829 792 B1, DE 298 10 883 U1, DE 299 11 034 U1 und DE 201 08 181 U1 beschrieben. Bei dem letztgenannten Dokument sind Pinolenausstanzungen zur Aufnahme der Pinolen im Boden des körbchenartigen Flaschenträgers gezeigt. Es versteht sich, dass auch die Flaschenträger vom Körbchentyp aus den weiteren Dokumenten mit Pinolenausstanzungen im Boden versehen werden, um in den erfindungsgemäßen Getränkekasten eingesetzt zu werden. Die Inhalte der vorbezeichneten Druckschriften sind durch Bezugnahme in die vorliegende Anmeldung einbezogen.

Nachfolgend wird die Erfindung anhand der anliegenden Zeichnungen von Ausführungsbeispielen näher erläutert. In den Zeichnungen zeigen:
- Fig. 1a bis e: einen Getränkekasten für 1/2-Liter-Flaschen in einer Perspektivansicht schräg von vom (Fig. 1a), in einer Perspektivansicht schräg von oben (Fig. 1b), in einer Perspektivansicht schräg von unten (Fig. 1c), in einer Draufsicht (Fig. 1d) und in einer Unteransicht (Fig. 1e);
- Fig. 2a bis d: zwei Getränkekästen gemäß Fig. 1 übereinander gestapelt in Vorderansicht (Fig. 2a), in einem vertikalen Längsschnitt (Fig. 2b), in einem vertikalen Querschnitt (Fig. 2c) und in einem vergrößerten Detail d von Fig. 2c (Fig. 2d);
- Fig. 3a bis e: ein nicht erfindungsgemäßer Getränkekasten für 1/3-Liter-Flaschen in einer Perspektivansicht schräg von vom (Fig. 3a), in einer Perspektivansicht schräg von oben (Fig. 3b), in einer Perspektivansicht schräg von unten (Fig. 3c), in einer Draufsicht (Fig. 3d) und in einer Unteransicht (Fig. 3e);
- Fig. 4a bis d: zwei Getränkekästen gemäß Fig. 3 übereinander gestapelt in Seitenansicht (Fig. 4a), in einem vertikalen Längsschnitt (Fig. 4b), in einem vertikalen Querschnitt (Fig. 4c) und in einem vergrößerten Detail d von Fig. 4c (Fig. 4d);
- Fig. 5a bis c: eine Auswahl von Bestückungsmöglichkeiten des Getränkekastens von Fig. 1 für 0,5-Liter-Flaschen mit verschiedenen Flaschenträgern in einer grobschematischen Draufsicht;
- Fig. 6a bis c: eine Auswahl von Bestückungsvarianten des Getränkekastens von Fig. 3 für 0,33-Liter-Flaschen mit verschiedenen Flaschenträgern in einer grobschematischen Draufsicht.

Bei der nachfolgenden Erläuterung verschiedener Ausführungsbeispiele sind übereinstimmende Teile mit denselben führenden Bezugsziffern versehen, auf die ein Punkt und eine individuelle Bezugsziffer folgt.

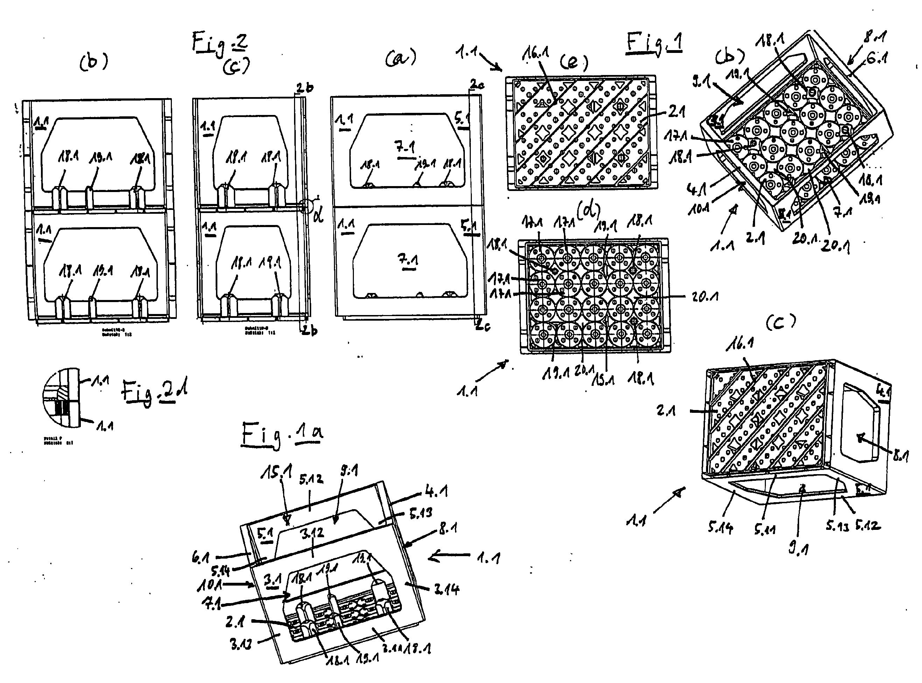

Die Getränkekästen 1.1 und 1.2 gemäß Fig. 1 bis 4 haben jeweils einen Boden 2.1, 2.2 und von den Rändern des Bodens hochstehende Seitenwände 3.1, 3.2, 4.1, 4.2, 5.1, 5.2 und 6.1, 6.2.

In jeder Seitenwand 3.1 bis 6.2 ist eine große Öffnung 7.1, 7.2, 8.1, 8.2, 9.1, 9.2 und 10.1, 10.2 vorhanden. Jede Öffnung 7.1 bis 10.2 ist unten rechteckig und verjüngt sich im oberen Bereich nach oben hin trapezförmig.

Die Öffnungen 7.1 bis 10.2 nehmen den größten Teil der Flächen der jeweiligen Seitenwand 3.1 bis 6.2 ein. Hierdurch ist jede Seitenwand rahmenartig mit einem unteren und einem oberen horizontalen Rahmenteil 3.1.1, 3.1.2 bis 6.2.1, 6.2.2 und jeweils zwei seitlichen vertikalen Rahmenteile 3.1.3, 3.1.4 bis 6.2.3, 6.2.4 ausgeführt.

Die vertikalen Rahmenteile benachbarter Seitenwände sind an den Ecken einteilig miteinander verbunden.

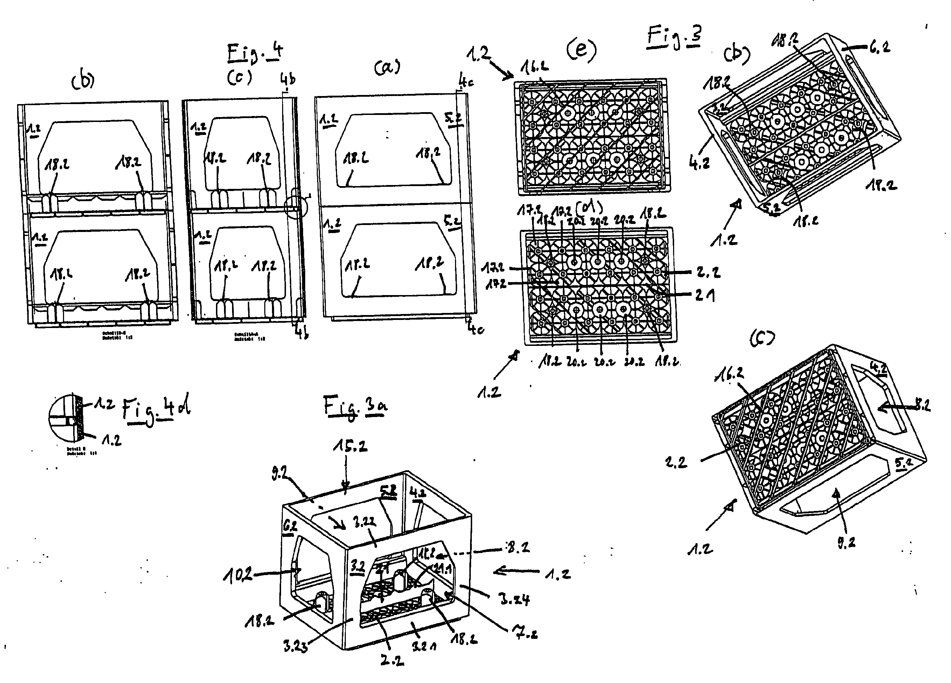

Beide Kästen 1.1, 1.2 weisen an der Unterseite bezüglich der Außenseiten der Seitenwände 3.1 bis 6.2 nach innen versetzte Sockelleisten 11.1, 11.2, 12.1, 12.2, 13.1, 13.2, 14.1,14.2 auf. Oben umgrenzen die Seitenwände 3.1 bis 6.2 beider Kästen 1.1, 1.2 eine Öffnung 15.1, 15.2. Kästen 1.1 bzw. 1.2 sind jeweils aufeinander stapelbar, so dass die Sockelleisten 11.1 bis 14.2 in die Öffnung 15.1, 15.2 eingreifen und die Kästen aneinander führen, wie in Fig. 2 und 4 gezeigt. Ebenso sind Kästen 2.1 und 2.2 in der beschriebenen Weise miteinander stapelbar.

Ferner haben die Kästen 1.1 und 1.2 an der Unterseite ihrer Böden 2.1, 2.2 jeweils mehrere Rippen 16.1, 16.2, die um 45 Grad zu den Seitenwänden 3.1 bis 6.2 geneigt über die Unterseiten der Böden 2.1, 2.2 verlaufen. Die Rippen 16.1, 16.2 erstrecken sich von der Innenseite einer Sockelleiste 11.1 bis 14.2 zur Innenseite einer anderen Sockelleiste. Sie steifen die Böden 2.1, 2.2 aus und stabilisieren die Sockelleisten 11.1 bis 14.2.

Die Kästen 1.1, 1.2 haben an der Oberseite ihrer Böden 2.1, 2.2 Stellplätze 17.1, 17.2 für Flaschen. Bei dem Kasten 1.1 sind 20 Stellplätze und bei dem Kasten 1.2 sind 24 Stellplätze 17.2 vorhanden.

Die Stellplätze 17.1, 17.2 sind durch die Seitenwände 3.1 und/oder durch vom Boden 2.1, 2.2 hochstehende Stützelemente 18.1, 18.2, 19.1, 19.2, 20.1, 20.2 begrenzt. Zu diesen Stützelementen gehören bei dem Kasten 1.1 drei Vollpinolen 18.1, die in der Mitte zwischen vier Stellplätzen an drei Ecken dieses Kastens 1.1 angeordnet sind. In einer weiteren Ecke hat der Kasten 1.1 eine Halbpinole 19.1, die ihre flache Seite der benachbarten Vollpinole 18.1 an derselben Schmalseite zuwendet.

Ferner hat der Flaschenkasten 1.1 in der Mitte von vier Stellplätzen 17.1 neben den beiden Vollpinolen 18.1, die an den Ecken einer Schmalseite angeordnet sind, zwei Halbpinolen 19.1, die ihre flachen Seiten den besagten Vollpinolen 18.1 zuwenden.

Des Weiteren hat der Flaschenkasten 1.1 zwischen den beiden mittleren Reihen Stellplätze Zentren mit Vorsprüngen 20.1, die sich höchstens bis zur Höhe von Stützschwellen erstrecken. Diese Vorsprünge ragen nur einige Millimeter über die angrenzende Fläche des Bodens 2.1 hinaus.

Darüber hinaus hat dieser Kasten in Querrichtung bezüglich der Reihen mit Stellplätzen 17.1 für Flaschen zwischen den Stellplätzen, die zwischen den in Querrichtung nebeneinander angeordneten Halbpinolen 19.1 und in Querrichtung nebeneinander angeordneten Voll- und Halbpinolen 18.1, 19.1 angeordnet sind, eine Spalte mit weiteren Vorsprüngen, die sich höchstens bis zur Höhe von Stützschwellen erstrecken.

Der Flaschenkasten 1.2 hat jeweils in dem Zentrum von vier Stellplätzen 17.2 an den vier Ecken eine Vollpinole 18.2. Zwischen den in Längsrichtung hintereinander angeordneten Vollpinolen stehen vom Boden jeweils in der Mitte zwischen vier Stellplätzen 17.2 Vorsprünge 20.2 empor, die sich höchstens bis zur Höhe von Stützschwellen erstrecken.

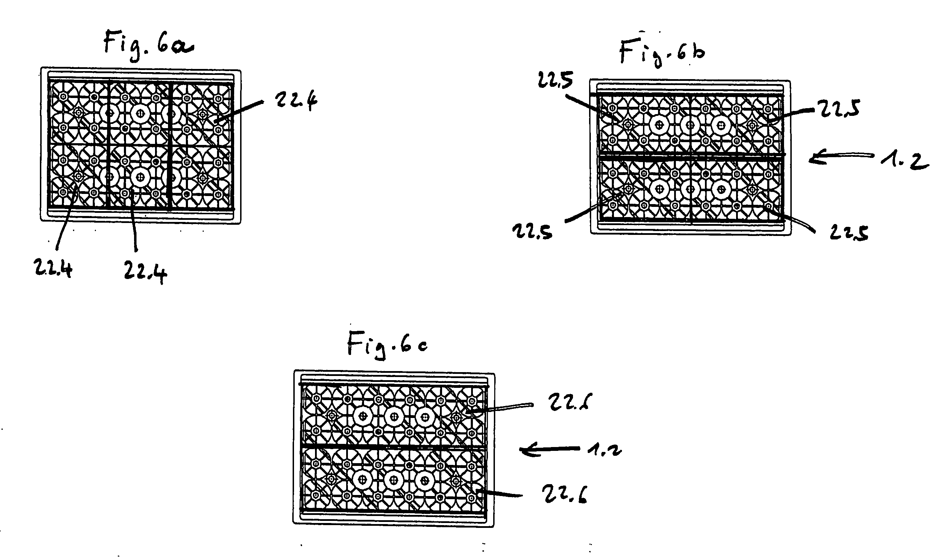

Gemäß einer nicht erfindungsgemäßen Variante steht zwischen den beiden mittleren Reihen mit Stellplätzen in der Längsmittelebene vom Boden eine Stützwand 21 hoch. Die Stützwand 21 hat am oberen Rand Vorsprünge 21.1, die im Beispiel dreiecksförmig ausgebildet sind. Diese Vorsprünge 21.1 dienen dazu, die Stützwand 21 in einen Schlitz an der Unterseite eines Flaschenträgers einzuführen, der auf den Boden 2.2 aufgesetzt wird und die Stützwand 21 übergreift. Ein Beispiel dafür ist ein Flaschenträger für acht 1/3-Liter-Flaschen. Eine derartige Bestückung des Flaschenkastens 1.2 wird weiter unten anhand der Fig. 6a erläutert.

In den Flaschenträger 1.1 sind Einzelflaschen und wahlweise Flaschenträger mit zwei, vier, sechs, acht, zehn oder zwölf Flaschen einsetzbar. Auch gemischte Bestückungen mit Einzelflaschen und/oder gleichen und/oder verschiedenen Flaschenträgern sind möglich. Der Flaschenkasten 11 kann zum Transport von Vollgut und von Leergut benutzt werden. Der Boden 2.1 wird durch die Rippen 16.1 an der Unterseite hinreichend stabilisiert. Ebenso werden die Sockelleisten 11.1 bis 14.1 durch die Rippen stabilisiert, so dass sie nicht abgeschert werden, wenn auf übereinander gestapelte Getränkekästen eine seitliche Kraft ausgeübt wird.

Dementsprechend können in den Getränkekasten 1.2 Einzelflaschen oder Flaschen in Flaschenträgern mit zwei, vier, sechs, acht oder zehn Flaschen angeordnet werden. Auch sind gemischte Bestückungen möglich. Der Getränkekasten 1.2 kann sowohl zum Transport von Vollgut als auch von Leergut genutzt werden. Auch bei dem Getränkekasten 1.2 werden Boden 2.2 und Sockelleisten 11.2 bis 14.2 durch die Rippen 16.2 stabilisiert.

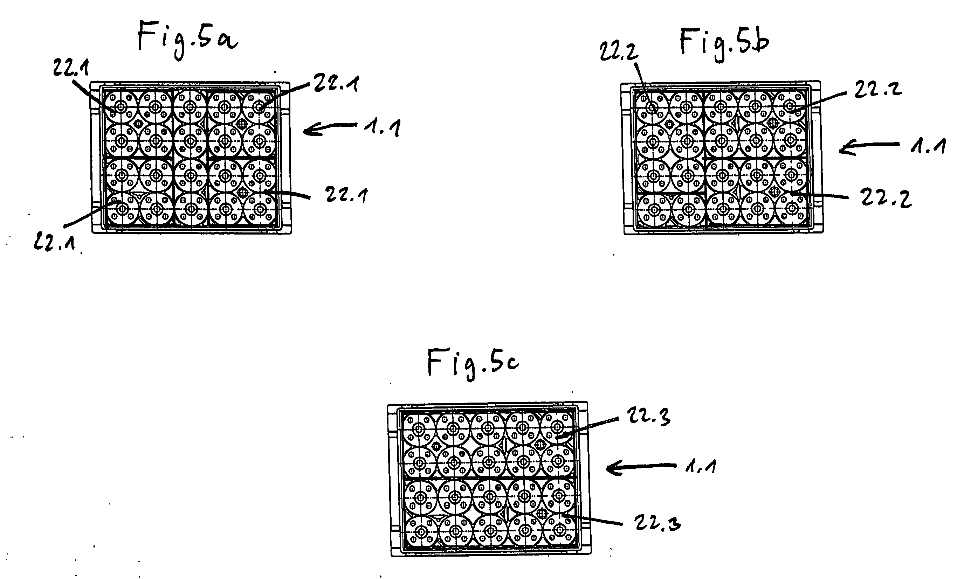

Gemäß Fig. 5a ist der Getränkekasten 1.1 mit vier Flaschenträgern 22.1 mit jeweils vier 0,5-Liter-Flaschen bestückt.

Gemäß Fig. 5b ist der Getränkekasten 1.1 mit drei Flaschenträgern 22.2 enthaltend jeweils sechs 0,5-Liter-Flaschen bestückt.

Gemäß Fig. 5c ist der Getränkekasten 1.1 mit zwei Flaschenträgern 22.3 für je zehn 0,5-Liter-Flaschen bestückt.

Gemäß Fig. 6a ist der Getränkekasten 1.2 mit drei Flaschenträgern 22.4 für je acht 0,33-Liter-Flaschen bestückt. Die Flaschenträger 22.4 sind unten mit einem quer über die Flaschenträger 22.4 verlaufenden Schlitz versehen, der die Stützwand 21 aufweist.

Gemäß Fig. 6b ist der Getränkekasten 1.2 mit vier Flaschenträgern 20.5 mit je sechs 0,33-Liter-Flaschen bestückt.

Schließlich ist gemäß Fig. 6c der Getränkekasten 1.2 mit zwei Flaschenträgern 22.6 mit je zwölf 0,33-Liter-Flaschen bestückt.

## Patentansprüche

1. Getränkekasten zum Transportieren von einzelnen Flaschen und verschieden großen Flaschenträgern mit darin enthaltenen Flaschen mit
- einem Boden (2),
- von den Rändern des Bodens (2) vorstehenden Seitenwänden (3 bis 6) mit Öffnungen (7 bis 10) zum Tragen des Getränkekastens (1) und/oder zum Sichtbarmachen von Flaschen oder Flaschenträgern für einen von außen auf die Öffnung (7 bis 10) blickenden Betrachter,
- wobei der Boden (2) auf der Oberseite eine Lagerfläche zum Aufsetzen der Böden von Flaschen und/oder von Flaschenträgern aufweist, die zumindest vier Reihen mit Stellplätzen (17) für Flaschen hat, in denen jeweils zumindest fünf Stellplätze für Flaschen vorhanden sind,
- wobei zwischen den Stellplätzen (17) Stützelemente (18, 19, 20) zum Abstützen einzelner Flaschen und von Flaschenträgern vorstehen,
- wobei in der Mitte der vier Stellplätze (17) an jeder Ecke des Bodens (2) eine Halbpinole (19) oder eine Pinole (18) angeordnet ist, die zumindest eine gekrümmte Stützfläche hat, die dem Stellplatz für Flaschen in der Ecke des Bodens zugewandt ist, **dadurch gekennzeichnet, dass**
- in der Mitte der zwei zentralen Reihen mit Stellplätzen (17.1) Vorsprünge (20.1) auf dem Boden (2.1) vorhanden sind, die höchstens die Höhe von Stützschwellen aufweisen, wobei die Vorsprünge (20.1) nur einige Millimeter über die angrenzende Fläche des Bodens (2.1) hinausragen
- an der Unterseite des Bodens (2) Versteifungselemente vorhanden sind und
- die Versteifungselemente über die Unterseite des Bodens (2) erstreckte parallele Rippen (16) sind.

2. Kasten nach Anspruch 1, bei dem in der Mitte von vier Stellplätzen (17.1) für Flaschen an drei Ecken eine Pinole (18.1) angeordnet ist und in der Mitte von vier Stellplätzen für Flaschen an einer weiteren Ecke eine Halbpinole (19.1) angeordnet ist, die eine flache Seite hat, die der Pinole (18.1) an derselben Schmalseite zugewandt ist.

3. Kasten nach Anspruch 1 oder 2, bei dem an einer Schmalseite in der Mitte von vier Stellplätzen (17.1) für Flaschen an beiden Ecken Pinolen (18.1) vorhanden sind und in der Richtung derselben Reihe von Stellplätzen (17.1) in der Mitte zwischen den nächsten vier Stellplätzen (17.1) Halbpinolen (19.1) vorhanden sind, die mit einer flachen Seite den Pinolen (18.1) an den Ecken der Schmalseite zugewandt sind.

4. Kasten nach einem der Ansprüche 1 bis 3, bei dem in Querrichtung bezüglich der Reihen mit Stellplätzen (17.1) für Flaschen zumindest eine Reihe mit Zentren zwischen einer Reihe von vier Flaschenstellplätzen vorhanden ist, in der Vorsprünge (20.1) angeordnet sind, die sich höchstens bis zur Höhe von Stützschwellen erstrecken.

5. Kasten nach einem der Ansprüche 1 bis 4, in den zumindest wahlweise Flaschenträger für zwei, vier, sechs, acht und zehn Flaschen einsetzbar oder eingesetzt sind.

6. Kasten nach Anspruch 1, bei dem in der Mitte von vier Stellplätzen (17.2) für Flaschen an vier Ecken jeweils eine Pinole (18.2) angeordnet ist.

7. Kasten nach Anspruch 6, bei dem in Längsrichtung der Reihen mit Stellplätzen (17.2) für Flaschen im Bereich zwischen den in Längsrichtung voneinander beabstandeten Pinolen (18.2) eine Reihe mit Zentren zwischen jeweils vier benachbarten Stellplätzen (17.2) für Flaschen vorhanden ist, in der Vorsprünge angeordnet sind, die sich höchstens bis zur Höhe von Stützschwellen erstrecken.

8. Kasten nach einem der Ansprüche 6 bis 7, in den zumindest wahlweise Flaschenträger für zwei, vier, sechs, acht, zehn und zwölf Flaschen einsetzbar oder eingesetzt sind.

9. Kasten nach einem der Ansprüche 1 bis 8, bei dem mindestens eine Seitenwand (2 bis 6) einen Rahmen mit einem vom Rand des Bodens vorstehenden unteren horizontalen Rahmenteil, zwei von dem unteren horizontalen Rahmenteil hochstehenden seitlichen vertikalen Rahmenteilen und einem diese oben überbrückenden oberen horizontalen Rahmenteil aufweist, wobei die Rahmenteile eine Öffnung (7 bis 10 ) zum Greifen und/oder Betrachten umgrenzen.

10. Kasten nach einem der Ansprüche 1 bis 9, bei dem die Rippen (16) gitterartig angeordnet sind.

11. Kasten nach einem der Ansprüche 1 bis 10, der an der Unterseite bezüglich der Seitenwände (3 bis 6) nach innen versetzte Sockelleisten aufweist, mit denen der Kasten in die obere Öffnung (15) eines gleichartigen Kastens einsetzbar ist, wenn der Kasten mit seitlich über die Sockelleisten überstehenden Bereichen der Unterseite auf den oberen Rand der Seitenwände (3 bis 6) des gleichartigen Kastens aufgesetzt wird.

12. Kasten nach Anspruch 11, bei dem Rippen (16) an der Unterseite des Bodens (2) von der Innenseite einer Sockelleiste bis zu der Innenseite einer anderen Sockelleiste erstreckt sind.

13. Kasten nach einem der Ansprüche 1 bis 12, bei dem die Seitenwände (3 bis 6) an einem Kastenrahmen ausgebildet sind, der Boden (2) in den Kastenrahmen eingesetzt ist und Mittel zum lösbaren Halten des Bodens im Kastenrahmen vorhanden sind.

14. Kasten nach Anspruch 13, bei dem die Mittel zum lösbaren Halten Schnappverbindungsmittel von Kastenrahmen und Boden (2) sind.

15. Kasten nach einem der Ansprüche 1 bis 14, der aus mindestens einem Kunststoff hergestellt ist.

16. Kasten nach einem der Ansprüche 1 bis 15, der mit gefüllten und/oder ungefüllten Flaschen befüllt ist.

17. Kasten nach einem der Ansprüche 1 bis 16, der mit Flaschen, die nicht in einen Flaschenträger eingesetzt sind, und/oder die in Flaschenträger eingesetzt sind, bestückt ist.

18. Kasten nach einem der Ansprüche 1 bis 17, der mit Flaschen mit einer Füllmenge von einem 1/3-Liter oder von 1/2-Liter bestückt ist.

## Claims

1. A bottle crate for transporting individual bottles and different size bottle carriers with bottles contained therein with
- a bottom (2),
- lateral walls (3 to 6) protruding from the borders of the bottom (2) with openings (7 to 10) for carrying the bottle crate (1) and/or for making bottles or bottle carriers visible for a viewer looking at the opening (7 to 10) from the outside,
- wherein the bottom (2) has a storage surface on the topside for placement of the bottoms of bottles and/or of bottle carriers which has at least four rows with spaces (17) for bottles in each of which at least five spaces for bottles are present,
- wherein support elements (18, 19, 20) for supporting individual bottles and bottle carriers project between the spaces (17),
- wherein a half-sleeve (19) or sleeve (18) is arranged in the middle of the four spaces (17) at each corner of the bottom (2) which has at least one curved support surface which faces the space for bottles in the corner of the bottom, **characterized in that** in the middle of the two central rows with spaces (17.1) projections (20.1) are present on the floor (2.1) that are not higher than support thresholds, wherein the projections (20.1) protrude only a few millimeters beyond the adjoining surface of the bottom (2.1),
- stiffening elements are present at the underside of the bottom (2) and
- the stiffening elements are parallel ribs (16) extended across the underside of the bottom (2).

2. The crate according to Claim 1, in which a sleeve (18.1) is arranged in the middle of four spaces (17.1) for bottles at three corners and a half-sleeve (19.1) is arranged in the middle of four spaces for bottles at a further corner, said half-sleeve having a flat side which faces the sleeve (18.1) at the same narrow side.

3. The crate according to Claim 1 or 2, in which sleeves (18.1) are present at both corners at a narrow side in the middle of four spaces (17.1) for bottles and in the direction of the same row of spaces (17.1) half-sleeves (19.1) are present in the middle between the next four spaces (17.1), said half-sleeves facing the sleeves (18.1) with a flat side at the corners of the narrow side.

4. The crate according to any one of Claims 1 to 3, in which in transverse direction relative to the rows with spaces (17.1) for bottles at least one row with centers is present between a row of four bottle spaces, said row in which projections (20.1) are arranged which extend no higher than supporting thresholds.

5. The crate according to any one of Claims 1 to 4, in which at least optionally bottle carriers for two, four, six, eight and ten bottles are insertable or are inserted.

6. The crate according to Claim 1, in which a sleeve (18.2) is arranged in the middle of four spaces (17.2) for bottles at each of four corners.

7. The crate according to Claim 6, in which in longitudinal direction of the rows with spaces (17.2) for bottles a row with centers between each of four adjacent spaces (17.2) for bottles is present in the region between the sleeves (18.2) spaced apart from one another in longitudinal direction, said row in which projections are arranged which extend no higher than the supporting thresholds.

8. The crate according to any one of Claims 6 to 7, in which at least optionally bottle carriers for two, four, six, eight, ten and twelve bottles are insertable or are inserted.

9. The crate according to any one of Claims 1 to 8, in which at least one lateral wall (2 to 6) has a frame with a lower horizontal frame part protruding from the border of the bottom, two lateral vertical frame parts elevated from the lower horizontal frame part and an upper horizontal frame part bridging said lateral vertical frame parts, wherein the frame parts define an opening (7 to 10) for handling and/or viewing.

10. The crate according to any one of Claims 1 to 9, in which the ribs (16) are in lattice-like arrangement.

11. The crate according to any one of Claims 1 to 10, which has baseboard strips offset to the inside on the underside relative to the lateral walls (3 to 6) with which the crate are insertable into the upper opening (15) of a similar crate when the crate is placed upon the upper border of the lateral walls (3 to 6) of the similar crate with regions of the underside protruding laterally beyond the baseboard strips.

12. The crate according to Claim 11, in which ribs (16) on the underside of the bottom (2) extend from the inside of one baseboard strip to the inside of another baseboard strip.

13. The crate according to any one of Claims 1 to 12, in which the lateral walls (3 to 6) are formed on a crate frame, the bottom (2) is inserted into the crate frame and means for detachable retaining of the bottom in the crate frame are present.

14. The crate according to Claim 13, in which the means for detachable retaining are snap-on connection means of the crate frame and bottom (2).

15. The crate according to any one of Claims 1 to 14, which is manufactured of at least one plastic material.

16. The crate according to any one of Claims 1 to 15, which is filled with filled and/or unfilled bottles.

17. The crate according to any one of Claims 1 to 16, which is equipped with bottles that are not inserted in a bottle carrier and/or are inserted into bottle carriers.

18. The crate according to any one of Claims 1 to 17, which is equipped with bottles with a filling capacity of 1/3 liter or of 1/2 liter.

## Revendications

1. Casier à bouteilles pour le transport de bouteilles individuelles et de porte-bouteilles de différentes tailles avec les bouteilles que ces derniers contiennent, avec
- un fond (2),
- des parois latérales (3 à 6) faisant saillie des bords du fond (2) avec des orifices (7 à 10) permettant de porter le casier à bouteilles (1) et/ou de rendre visible des bouteilles ou porte-bouteilles à un observateur regardant l'orifice (7 à 10) de l'extérieur,
- dans lequel le fond (2) présente sur la face supérieure une surface de stockage pour placer les fonds de bouteilles et/ou de porte-bouteilles, surface présentant au moins quatre rangées d'emplacements de stockage (17) pour bouteilles comportant respectivement au moins cinq emplacements de stockage pour bouteilles,
- dans lequel des éléments d'appui (18, 19, 20) débordent entre les emplacements de stockage (17) pour étayer des bouteilles individuelles et des porte-bouteilles,
- dans lequel est disposée, au centre des quatre emplacements de stockage (17), à chaque coin du fond (2) une demi-torpille (19) ou une torpille (18) qui a au moins une surface d'appui arquée faisant face à l'emplacement de stockage pour bouteilles se trouvant dans le coin du fond,
**caractérisé en ce que**
- se trouvent au centre des deux rangées centrales comportant des emplacements de stockage (17.1) des protubérances (20.1) sur le fond (2.1) qui ont tout au plus la hauteur de seuils d'appui, les protubérances (20.1) ne débordant de la surface adjacente du fond (2.1) que de quelques millimètres,
- des éléments de renfort existent sur la face inférieure du fond (2) et
- les éléments de renfort sont des nervures parallèles (16) qui s'étendent sur la face inférieure du fond (2).

2. Casier selon la revendication 1, dans lequel est disposée au centre de quatre emplacements de stockage (17.1) pour bouteilles, à trois coins, une torpille (18.1) et, au centre de quatre emplacements de stockage pour bouteilles, à un autre coin, une demi-torpille (19.1) présentant un côté plat faisant face à la torpille (18.1) sur le même côté étroit.

3. Casier selon la revendication 1 ou 2, dans lequel existent sur un côté étroit au centre de quatre emplacements de stockage (17.1) pour bouteilles, dans les deux coins, des torpilles (18.1) et, dans la direction de la même rangée d'emplacements de stockage (17.1) au centre entre les quatre prochains emplacements de stockage (17.1), des demi-torpilles (19.1) faisant face avec un côté plat aux torpilles (18.1) dans les coins du côté étroit.

4. Casier selon l'une quelconque des revendications 1 à 3, dans lequel existe dans le sens transversal par rapport à la rangée comportant des emplacements de stockage (17.1) pour bouteilles au moins une rangée avec des centres entre une rangée de quatre emplacements de stockage de bouteilles où sont disposées des protubérances (20.1) qui s'étendent tout au plus jusqu'à la hauteur de seuils d'appui.

5. Casier selon l'une quelconque des revendications 1 à 4, dans lequel, au moins en option, des porte-bouteilles pour deux, quatre, six, huit et dix bouteilles peuvent être ou sont insérés.

6. Casier selon la revendication 1, dans lequel est disposée au centre de quatre emplacements de stockage (17.2) pour bouteilles, dans quatre coins, chaque fois une torpille (18.2).

7. Casier selon la revendication 6, dans lequel existe dans le sens longitudinal des rangées comportant des emplacements de stockage (17.2) pour bouteilles, dans la zone située entre les torpilles (18.2) écartées l'une de l'autre dans le sens longitudinal, une rangée avec des centres entre chaque fois quatre emplacements de stockage (17.2) adjacents pour bouteilles où sont disposées des protubérances qui s'étendent tout au plus jusqu'à la hauteur de seuils d'appui.

8. Casier selon l'une quelconque des revendications 6 à 7, dans lequel, au moins en option, des porte-bouteilles pour deux, quatre, six, huit, dix et douze bouteilles peuvent être ou sont insérés.

9. Casier selon l'une quelconque des revendications 1 à 8, dans lequel au moins une paroi latérale (2 à 6) présente un cadre avec une partie de cadre horizontale inférieure faisant saillie du bord du fond, deux parties de cadre verticales latérales débordant vers le haut de la partie de cadre horizontale inférieure et une partie de cadre horizontale supérieure pontant ces dernières en haut, dans lequel les parties de cadre délimitent un orifice (7 à 10) pour la préhension et/ou l'observation.

10. Casier selon l'une quelconque des revendications 1 à 9, dans lequel les nervures (16) sont disposées en forme de grille.

11. Casier selon l'une quelconque des revendications 1 à 10 présentant sur la face inférieure, par rapport aux parois latérales (3 à 6), des plinthes décalées vers l'intérieur permettant d'insérer le casier dans l'orifice supérieur (15) d'un casier similaire lorsque le casier est posé avec des zones de la partie inférieure débordant latéralement des plinthes sur le bord supérieur des parois latérales (3 à 6) du casier similaire.

12. Casier selon la revendication 11, dans lequel des nervures (16) situées sur la face inférieure du fond (2) s'étendent de la face intérieure d'une plinthe jusqu'à la face intérieure d'une autre plinthe.

13. Casier selon l'une quelconque des revendications 1 à 12, dans lequel les parois latérales (3 à 6) sont formées sur un cadre de casier, le fond (2) est inséré dans le cadre de casier et des moyens permettant la tenue amovible du fond existent dans le cadre de casier.

14. Casier selon la revendication 13, dans lequel les moyens de tenue amovible sont des moyens de connexion par encliquetage du cadre de casier et du fond (2).

15. Casier selon l'une quelconque des revendications 1 à 14 fabriqué en au moins une matière plastique.

16. Casier selon l'une quelconque des revendications 1 à 15 rempli de bouteilles remplies et/ou non remplies.

17. Casier selon l'une quelconque des revendications 1 à 16 garni de bouteilles qui ne sont pas insérées dans un porte-bouteilles et/ou qui sont insérées dans des porte-bouteilles.

18. Casier selon l'une quelconque des revendications 1 à 17 garni de bouteilles avec une quantité de remplissage de 1/3 de litre ou de 1/2 litre.
